(19) Europäisches Patentamt
European Patent Office
Office européen des brevets

(11) **EP 4 787 458 A1**

(12) **EUROPEAN PATENT APPLICATION**

(43) Date of publication:
05.08.2026 Bulletin 2026/32

(21) Application number: 25226813.1

(22) Date of filing: 23.12.2025

(51) International Patent Classification (IPC):
$H01M\ 4/136^{(2010.01)}$    $H01M\ 4/36^{(2006.01)}$
$H01M\ 4/505^{(2010.01)}$    $H01M\ 4/58^{(2010.01)}$
$H01M\ 10/0525^{(2010.01)}$

(52) Cooperative Patent Classification (CPC):
H01M 4/136; H01M 4/364; H01M 4/505;
H01M 4/5825; H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.02.2025 JP 2025016004

(71) Applicant: Toyota Jidosha Kabushiki Kaisha
Toyota-shi, Aichi-ken 471-8571 (JP)

(72) Inventors:
• ISHIGAKI, Yuki
Toyota-shi, 471-8571 (JP)

• KOSAKA, Daichi
Toyota-shi, 471-8571 (JP)
• MAHARA, Takanori
Toyota-shi, 471-8571 (JP)
• MAEDA, Daiki
Toyota-shi, 471-8571 (JP)
• HASEGAWA, Yudai
Toyota-shi, 471-8571 (JP)
• EGUCHI, Tatsuya
Kariya-shi, Aichi-ken, 448-8671 (JP)
• KIMIJIMA, Takeshi
Kariya-shi, Aichi-ken, 448-8671 (JP)

(74) Representative: Kuhnen & Wacker
Patent- und Rechtsanwaltsbüro PartG mbB
Prinz-Ludwig-Straße 40 A
85354 Freising (DE)

(54) **POSITIVE ELECTRODE ACTIVE MATERIAL, ELECTRODE, AND BATTERY AND METHOD FOR PRODUCING POSITIVE ELECTRODE ACTIVE MATERIAL**

(57) Disclosed herein is a positive electrode active material including a secondary particle (2). The secondary particle (2) includes a first particle group and a second particle group. Each of the first particle group and the second particle group is composed of primary particles. The primary particles contain an olivine-type phosphate compound. An average particle diameter of the second particle group is larger than an average particle diameter of the first particle group. In the secondary particle (2), the primary particles (1a) belonging to the first particle group and the primary particle (1b) belonging to the second particle group are dispersed in each other.

FIG. 2

EP 4 787 458 A1

**Description**

BACKGROUND OF THE INVENTION

1. Field of the Invention

The present disclosure relates to a positive electrode active material, an electrode, and a battery and a method for producing a positive electrode active material.

2. Description of Related Art

Japanese Unexamined Patent Application Publication No. 2021-009838 (JP 2021-009838 A) discloses a granule of manganese-rich lithium manganese iron phosphate particles (average particle diameter 10 nm or more and 80 nm or less) and iron-rich lithium manganese iron phosphate particles (average particle diameter 80 nm or more and 150 nm or less).

SUMMARY OF THE INVENTION

It has been proposed that from the viewpoint of energy density and cycle resistance, a secondary particle (also referred to as "granule", "aggregated particle", or the like) is formed from two types of primary particles different from each other in average particle diameter. However, there is room for improvement from the viewpoint of achieving both fillability and tortuosity. The "tortuosity" is one of indicators of ion conductivity in an electrode. When the tortuosity is lower, the ion conductivity is considered to be more excellent.

The present disclosure provides a positive electrode active material, an electrode, and a battery and a method for producing a positive electrode active material, related to achieving both tortuosity and fillability.

Hereinbelow, the technical configurations and functions and effects of the present disclosure will be described. It should be noted that action mechanisms include presumptions. The action mechanisms do not limit the technical scope of the present disclosure.

A positive electrode active material according to a first aspect of the present disclosure includes a secondary particle. The secondary particle includes a first particle group and a second particle group. Each of the first particle group and the second particle group is composed of primary particles. The primary particles contain an olivine-type phosphate compound. An average particle diameter of the second particle group is larger than an average particle diameter of the first particle group. In the secondary particle, the primary particles belonging to the first particle group and the primary particles belonging to the second particle group are dispersed in each other.

Hereinafter, the "primary particles belonging to the first particle group" is also referred to as "small particles". The "primary particles belonging to the second particle group" is also referred to as "large particles".

The olivine-type phosphate compound (hereinafter may be abbreviated as "olivine") tends to have a high resistance. In order to achieve a resistance suitable for practical use, it is required to reduce the size of the primary particles from a submicron scale to a nanometer scale. Fine primary particles are highly likely to aggregate. Heretofore, it has been proposed that a secondary particle is formed from small particles and large particles prepared separately from each other. However, as described above, primary particles are highly likely to aggregate, and therefore it is considered that primary aggregates formed from the small particles and primary aggregates formed from the large particles further aggregate to form secondary aggregates. Therefore, it is considered that when an electrode is compressed, the small particles are less likely to enter into gaps between the large particles in the primary aggregates formed from the large particles. This makes it difficult to achieve both fillability and tortuosity.

In the secondary particle according to the present disclosure, the small particles and the large particles are dispersed in each other. Therefore, it is considered that when an electrode is compressed, the primary particles are likely to be densely packed because the small particles enter into gaps between the large particles. Therefore, both fillability and tortuosity are expected to be achieved.

In the positive electrode active material according to the first aspect of the present disclosure, a relationship of $1.5 \leq d_2/d_1 \leq 10$ may be satisfied. The $d_1$ may represent the average particle diameter of the first particle group. The $d_2$ may represent the average particle diameter of the second particle group.

When the average particle diameter ratio "$d_2/d_1$" is 1.5 to 10, tortuosity is expected to improve.

In the positive electrode active material according to the first aspect of the present disclosure, a relationship of $3.0 \leq d_2/d_1$ may be satisfied.

When the average particle diameter ratio "$d_2/d_1$" is 3.0 or more, tortuosity is expected to improve.

In the positive electrode active material according to the first aspect of the present disclosure, a relationship of $5.0 \leq d_2/d_1$ may be satisfied.

When the average particle diameter ratio "$d_2/d_1$" is 5.0 or more, tortuosity is expected to improve.

In the positive electrode active material according to the first aspect of the present disclosure, a relationship of $200 \text{ nm} \leq d_2 \leq 500 \text{ nm}$ may be satisfied.

When the average particle diameter of the large particles is 200 nm or more, tortuosity is expected to improve. When the average particle diameter of the large particles is 500 nm or less, ion conductivity in the large particles is expected to improve.

In the positive electrode active material according to the first aspect of the present disclosure, a relationship of $0.7000 < n_1/(n_1 + n_2) < 1.000$ may be satisfied. The $n_1$ may represent a proportion of the number of the primary particles belonging to the first particle group.

The $n_2$ may represent a proportion of the number of the primary particles belonging to the second particle group.

The ratio "$n_1/(n_1 + n_2)$" represents the ratio of the number of the small particles to the total number of the small particles and the large particles. When the number ratio of the small particles is more than 0.7000 and less than 1.000, tortuosity is expected to improve.

In the positive electrode active material according to the first aspect of the present disclosure, a relationship of $0.4 \leq m_1/(m_1 + m_2) \leq 0.6$ may be satisfied. The $m_1$ may represent a total mass of the primary particles belonging to the first particle group. The $m_2$ may represent a total mass of the primary particles belonging to the second particle group.

The ratio "$m_1/(m_1 + m_2)$" represents the ratio of the mass of the small particles to the total mass of the small particles and the large particles. When the mass ratio of the small particles is 0.4 to 0.6, tortuosity is expected to improve.

In the positive electrode active material according to the first aspect of the present disclosure, the olivine-type phosphate compound may contain at least one selected from the group consisting of lithium iron phosphate, lithium manganese phosphate, and lithium manganese iron phosphate.

It should be noted that lithium iron phosphate is hereinafter also referred to as "LFP", lithium manganese phosphate is hereinafter also referred to as "LMP", and lithium manganese iron phosphate is hereinafter also referred to as "LMFP".

In the positive electrode active material according to the first aspect of the present disclosure, an aggregate constituted from the primary particles belonging to the first particle group and the primary particles belonging to the second particle group may contain 2 to 4 primary particles belonging to the second particle group.

In the positive electrode active material according to the first aspect of the present disclosure, a relationship of $5 \text{ nm} \leq d_1 < 50 \text{ nm}$ may be satisfied.

In the positive electrode active material according to the first aspect of the present disclosure, a relationship of $50 \text{ nm} \leq d_2 \leq 500 \text{ nm}$ may be satisfied.

An electrode according to a second aspect of the present disclosure may include a positive electrode layer. The positive electrode layer may contain the positive electrode active material according to the above first aspect.

The positive electrode layer may also be referred to as a "positive electrode active material layer", a "positive electrode mixture layer", or the like. The "electrode" may either be a "monopolar electrode (positive electrode)" or a "bipolar electrode the according to the above aspect.

A battery according to a third aspect of the present disclosure may include the electrode according to the above second aspect.

The battery according to the third aspect of the present disclosure may have a bipolar structure.

The bipolar structure can be formed by stacking bipolar electrodes. It is expected that the bipolar structure improves, for example, output characteristics. However, the bipolar structure may be required to have a thick positive electrode layer. As the thickness of the positive electrode layer increases, the impact of fillability of the positive electrode active material and the tortuosity of the positive electrode layer on rate characteristics increases. The positive electrode active material according to the above first aspect is considered to be particularly suitable for the bipolar structure.

A method for producing a positive electrode active material according to a fourth aspect of the present disclosure includes preparing two or more types of secondary particles containing an olivine-type phosphate compound and different from each other in their average particle diameter of primary particles, disintegrating each of the two or more types of secondary particles to a scale of the primary particles by wet grinding to form a slurry in which the primary particles are dispersed, and spray-drying the slurry, in which two or more types of primary particles different from each other in average particle diameter are dispersed, to form new secondary particles.

In the present disclosure, secondary particles constituted from small particles and secondary particles constituted from large particles are prepared. Each of the secondary particles is once disintegrated to the scale of the primary particles. A slurry in which the small particles and the large particles are dispersed on the scale of the primary particles may be spray-dried to form secondary particles in which the large particles and the small particles are dispersed in each other.

Hereinbelow, an embodiment of the present disclosure (which hereinafter may be abbreviated as "present embodiment") and an example of the present disclosure (which hereinafter may be abbreviated as "present example") will be described. It should be noted that the present embodiment and the present example do not limit the technical scope of the present disclosure. The present embodiment and the present example are illustrative in all aspects. The present embodiment and the present example are non-restrictive. The technical scope of the present disclosure includes all modifications within the meaning and the scope that are equivalent to the claims. For example, it is originally expected that certain configurations of the present embodiment may freely be combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

> FIG. 1 is a conceptual diagram of a secondary particle according to a reference mode;

FIG. 2 is a conceptual diagram of a secondary particle according to the present embodiment;

FIG. 3 shows an example of a number-based distribution of particle diameters of primary particles;

FIG. 4 is a schematic flowchart of a method for producing a positive electrode active material according to the present embodiment;

FIG. 5 is a schematic perspective view of a battery according to a present embodiment;

FIG. 6 is a schematic cross-sectional view taken along the line VI- VI in FIG.5; and

FIG. 7 is a table showing experimental results.

DETAILED DESCRIPTION OF EMBODIMENTS

Terms and Phrases

The terms "comprise", "include", "have", and variations thereof are open-ended terms. When a configuration is described using such an open-ended term, an optional element may or may not be further included in addition to an essential element. The term "consist of" is a closed term. However, even when a configuration is described using such a closed term, impurities present under normal conditions and an additional element irrelevant to the target technique may be included. The term "essentially consist of" is a semi-closed term. When a configuration is described using such a semi-closed term, addition of an element that does not substantially affect the basic and novel characteristics of the target technique is allowed.

Terms such as "may" and "can" are used not in a mandatory sense, meaning "must" but in a permissive sense, meaning "it is possible".

A geometric term should not be interpreted in a strict sense. Examples of the geometric term include "parallel", "vertical", and "orthogonal". For example, direction, angle, or distance, may relatively be displaced to the extent that substantially the same or similar function can be obtained. The geometric term may include, for example, tolerances or errors in terms of design, operation, and production. A dimensional relationship in each of the drawings may not coincide with an actual dimensional relationship. The dimensional relationship in each of the drawings may have been changed to lead readers to understand. For example, length, width, and thickness may have been changed. Part of the configuration may have been omitted.

Unless otherwise specified, an element described in a "singular form" may be plural. For example, "a particle" may refer to a plurality of particles (group of particles), assemblies of particles, or a powder.

Unless otherwise specified, a numerical range such as "m% to n%" includes an upper limit and a lower limit. That is, "m% to n%" indicates a numerical range of "equal to or more than m% and equal to or less than n%". Further, "equal to or more than m% and equal to or less than n%" includes "more than m% and less than n%".

"Equal to or more than" and "equal to or less than" are expressed by inequality signs having an equal sign "$\leq$" and "$\geq$", respectively. "More than" and "less than" are expressed by inequality signs not having an equal sign "<" and ">", respectively. Any numerical value selected from the numerical range may be set as a new upper or lower limit. For example, a new numerical range may be set by freely combining a numerical value in the numerical range and a numerical value described in a different part herein or shown in tables or the drawings.

All the numerical values are interpreted as being modified by the term "about". The term "about" may mean, for example, $\pm 5\%$, $\pm 3\%$, or $\pm 1\%$. All the numerical values may be approximate values that may vary depending on how the target technique is used. All the numerical values may be expressed in significant figures. Unless otherwise specified, a measured value may be an average of two or more measurements. The number of measurements may be 3 or more, 5 or more, or 10 or more. It is generally expected that the larger the number of measurements, the higher the reliability of the average. A measured value may be rounded off based on the number of significant figures. A measured value may include, for example, an error due to the detection limit of a measurement device.

Devices, software, etc. used for measurement of various values are merely examples. Products similar to the devices etc. exemplified herein may be used. When a similar product is used, measurement conditions may be adjusted depending on a device to be used.

For example, dimensional measurement and shape analysis may be performed on various images using image analysis software. For example, image analysis software "ImageJ" may be used.

A "primary particle" refers to a particle apparently having no grain boundary in an SEM image taken by a FE-SEM (field emission scanning electron microscope) at a magnification of 20000 times to 100000 times.

A "particle diameter" is measured by image analysis (microscopy). The particle diameter refers to an arithmetic average of the long side (major-axis diameter) and the short side (minor-axis diameter) of minimum bounding rectangle (MBR) of outline of a particle in an SEM image.

An "average particle diameter" refers to the average of particle diameters. The average particle diameter is measured according to the following procedure. The SEM image of secondary particles (powder) is taken by an FE-SEM. The magnification of the image is 20000 times to 100000 times. In the SEM image, 100 primary particles are randomly selected in total from the secondary particles. The particle diameter of each of the primary particles is measured. The arithmetic average of particle diameters of the 100 primary particles is regarded as the average particle diameter of primary particles. Similarly, the arithmetic average of particle diameters of 100 secondary particles is regarded as the average particle diameter of secondary particles.

A state where "small particles and large particles are dispersed in each other" in a secondary particle refers to a state where at least one of the following conditions (1) to (6) is satisfied in the SEM image (20000 times) of secondary particles taken by an FE-SEM.

(1) An aggregate in which five or more large particles are aggregated has not been formed. That is, an aggregate constituted from small particles and large particles may contain 2 to 4 large particles.
(2) When 10 large particles are randomly selected, 10% by number or more of particles adjacent to each of one or more of the large particles are small particles.
(3) When 10 large particles are randomly selected, 30% by number or more of particles adjacent to each of three or more of the large particles are small particles.
(4) When 10 large particles are randomly selected, 30% by number or more of particles adjacent to each of five or more of the large particles are small particles.
(5) When 10 large particles are randomly selected, 50% by number or more of particles adjacent to each of five or more of the large particles are small particles.
(6) When 10 large particles are randomly selected, the total length of grain boundaries between a large particle and a small particle is larger than the total length of grain boundaries between large particles.

The presence of two or more particle groups different from each other in average particle diameter may be determined by a "number-based distribution (number-based frequency distribution)". The number-based distribution is formed according to the following procedure. An SEM image taken by an FE-SEM at a magnification of 20000 times to 100000 times is prepared. In the SEM image, 10 secondary particles are randomly selected. From each of the secondary particles, 100 primary particles are randomly selected. That is, 1000 primary particles are randomly selected in total. The particle diameter of each of the primary particles is measured. A number-based distribution is formed based on the particle diameters of the 1000 primary particles. In the number-based distribution, a peak having a maximum height (highest peak) is determined. A convex region having a height 0.1 times or more of the height of the highest peak is regarded as a peak. The number of peaks may correspond to the number of particle groups. A particle diameter at the peak top of each of the peaks is a "mode diameter". The mode diameter may correspond to the average particle diameter.

"D50" refers to a particle diameter corresponding to 50% of a cumulative volume in a volume-based cumulative distribution. The volume-based particle size distribution is measured by a laser diffraction particle size distribution measurement device.

The "degree of circularity" is measured in the SEM image of a particle. The degree of circularity is determined by the following calculation formula. The arithmetic average of degrees of circularity of 10 particles is used.

$$\psi = 4\pi S/L^2$$

$\psi$: Degree of circularity
$\pi$: Circle ratio
S: Sectional area of particle (Area of region surrounded by outline of particle)
L: Perimeter of particle (Length of outline of particle)

The chemical composition of a compound can be measured by ICP-AES (Inductively Coupled Plasma Atomic Emission Spectroscopy). A sample solution is prepared by dissolving 0.1 g of a sample (e.g., a positive electrode active material) in a mixed acid (10 mL) of hydrochloric acid and sulfuric acid. The sample solution is diluted to an appropriate concentration in a measuring flask. After dilution, chemical composition analysis is performed by an ICP-AES device. For example, a device sold under the trade name of "PS3520 UVDDII (manufactured by Hitachi High-Tech Science Corporation)" may be used.

A stoichiometric composition formula represents a typical example of a compound. A compound may have a non-stoichiometric composition. For example, "$Al_2O_3$" is not limited to a compound having an amount-of-substance ratio (mole ratio) of "Al/O = 2/3". Unless otherwise specified, "$Al_2O_3$" represents a compound containing Al and O in any amount-of-substance ratio. For example, the compound may be doped with a trace element. Some of Al and O may be replaced with another element.

A "derivative" refers to a compound obtained by modifying part of its original compound by at least one selected from the group consisting of functional group introduction, atomic substitution, oxidation, reduction, and another chemical reaction. The number of modification sites may be one or more. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (e.g., F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthiol group, a sulfonyl group, a sulfinyl group, a ureido group, an amide phosphate group, a sulfo group, a carboxyl group, a hydroxamic group, a sulfino group, a hydrazino group, an imino group, and a silyl group. These substituents may further be substituted. When there are two or more substituents, these substituents may be the same or different from each other. A plurality of substituents may be bonded to each other to form a ring.

Positive Electrode Active Material

A positive electrode active material includes a secondary particle. The positive electrode active material may be an assembly of secondary particles (powder). The D50 of the positive electrode active material may be, for example, 5 $\mu$m or more, 10 $\mu$m or more, 15 $\mu$m or more, or 20 $\mu$m or more. The D50 of the positive electrode active material may be, for example, 30 $\mu$m or less, 25 $\mu$m or less, 20 $\mu$m or less, 15 $\mu$m or less, or 10 $\mu$m or less.

Secondary Particle

The secondary particle is an aggregate of primary particles. The aggregate of primary particles includes a first particle group and a second particle group. Each of the first particle group and the second particle group is composed of primary particles. The second particle group has a larger average particle diameter than the first particle group. In other words, the average particle diameter of the second particle group is larger than that of the first particle group. The primary particles belonging to the first particle group are small particles. The primary particles belonging to the second particle group are large particles.

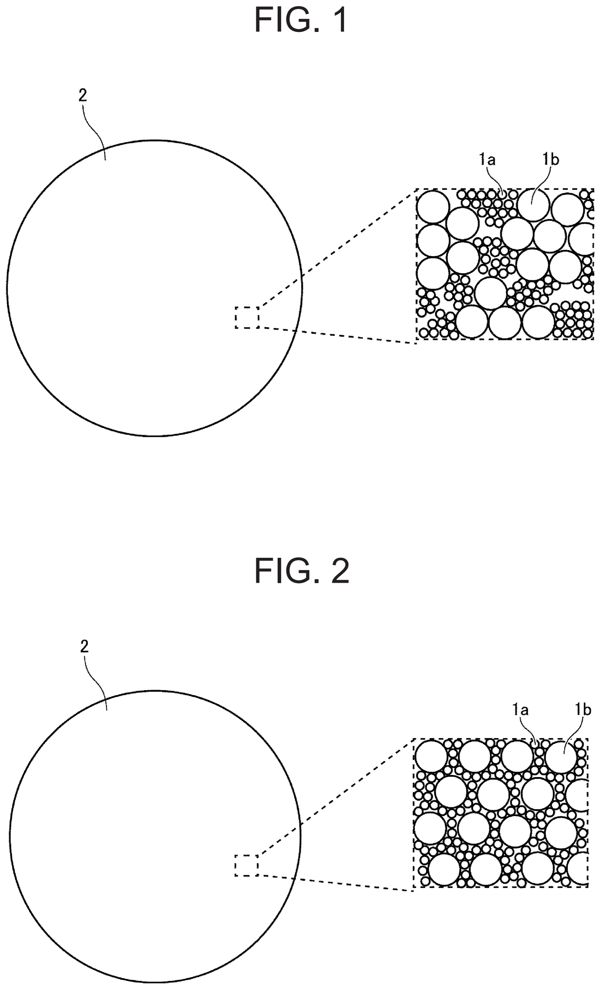

FIG. 1 is a conceptual diagram of a secondary particle according to a reference mode. A secondary particle 2 includes primary particles. The primary particles include small particles 1a and large particles 1b. In the reference mode, the small particles 1a and the large particles 1b are not dispersed in the secondary particle 2. The small particles 1a form primary aggregates and the large particles 1b also form primary aggregates. Between the primary aggregates, gaps are formed.

FIG. 2 is a conceptual diagram of a secondary particle according to the present embodiment. In the present embodiment, the small particles 1a and the large particles 1b are dispersed in each other in the secondary particle 2. Therefore, the small particles 1a and the large particles 1b are considered to be densely packed. That is, the present embodiment (FIG. 2) is expected to improve fillability as compared to the reference mode (FIG. 1). Further, since the large particles 1b are dispersed, tortuosity is also expected to improve.

In the present embodiment, the secondary particle 2 may have any shape. The secondary particle 2 may be, for example, spherical, rod-like, angular, or blocky. The degree of circularity of the secondary particle 2 may be, for example, 0.50 or more, 0.60 or more, 0.70 or more, 0.80 or more, 0.90 or more, or 0.95 or more. The degree of circularity of the secondary particle 2 may be, for example, 1.00 or less, 0.95 or less, 0.90 or less, 0.80 or less, 0.70 or less, or 0.60 or less. When the degree of circularity of the secondary particle 2 is higher, for example, fillability is expected to further improve.

The average particle diameter of the secondary particle 2 may be, for example, 1 $\mu$m or more, 3 $\mu$m or more, 5 $\mu$m or more, 10 $\mu$m or more, or 15 $\mu$m or more. The average particle diameter of the secondary particle 2 may be, for example, 20 $\mu$m or less, 15 $\mu$m or less, 10 $\mu$m or less, 5 $\mu$m or less, or 3 $\mu$m or less.

The secondary particle 2 may further include an additional particle group as long as it includes the first particle group (small particles 1a) and a second particle group (large particles 1b). The number of the additional particle groups may be, for example, one or more, two or more, three or more, or four or more. The number of the additional particle groups may be, for example, five or less, four or less, three or less, or two or less. The additional particle group may have, for example, a smaller average particle diameter than the first particle group (small particles 1a). The additional particle group may have, for example, an average particle diameter larger than that of the first particle group (small particles 1a) and smaller than that of the second particle group (large particles 1b). The additional particle group may have, for example, a larger average particle diameter than the second particle group (large particles 1b).

Primary Particle

The primary particles may have any shape. That is, the small particles 1a and the large particles 1b may independently have any shape. The small particles 1a and the large particles 1b may independently be, for example, spherical, rod-like, angular, or blocky. The degree of circularity of the small particles 1a and the degree of circularity of the large particles 1b may independently be, for example, 0.50 or more, 0.60 or more, 0.70 or more, 0.80 or more, 0.90 or more, or 0.95 or more. The degree of circularity of the small particles 1a and the degree of circularity of the large particles 1b may independently be, for example, 1.00 or less, 0.95 or less, 0.90 or less, 0.80 or less, 0.70 or less, or 0.60 or less. When the degree of circularity of the primary particles is higher, for example, fillability is expected to further improve.

The average particle diameter ratio between the first particle group (small particles 1a) and the second particle group (large particles 1b) "$d_2/d_1$" may be, for example, 2.0 or more, 3.0 or more, 4.0 or more, 5.0 or more, 6.0 or more, 7.0 or more, 7.5 or more, 8.0 or more, 9.0 or more, or 10 or more. The average particle diameter ratio "$d_2/d_1$" may be, for example, 15 or less, 12 or less, 10 or less, 9.0 or less, 8.0 or less, 7.5 or less, 7.0 or less, 6.0 or less, 5.0 or less, 4.0 or less, 3.0 or less, or 2.0 or less. For example, a relationship of "$1.5 \leq d_2/d_1 \leq 10$", "$3.0 \leq d_2/d_1 \leq 10$", or "$5.0 \leq d_2/d_1 \leq 10$" may be satisfied.

The average particle diameter of the second particle group (large particles 1b) "$d_2$" may be, for example, 50 nm or more, 60 nm or more, 61 nm or more, 70 nm or more, 80 nm or more, 90 nm or more, 100 nm or more, 120 nm or more, 140 nm or more, 160 nm or more, 180 nm or more, 200 nm or more, 220 nm or more, 240 nm or more, 260 nm or more, 280 nm or more, 298 nm or more, 300 nm or more, 320 nm or more, 340 nm or more, 360 nm or more, 380 nm or more, 400 nm or more, or 401 nm or more. The average particle diameter "$d_2$" may be, for example, 1000 nm or less, 750 nm or less, 500 nm or less, 450 nm or less, 401 nm or less, 400 nm or less, 380 nm or less, 360 nm or less, 340 nm or less, 320 nm or less, 300 nm or less, 298 nm or less, 280 nm or less, 260 nm or less, 240 nm or less, 220 nm or less, 200 nm or less, 180 nm or less, 160 nm or less, 140 nm or less, 120 nm or less, 100 nm or less, 90 nm or less, 80 nm or less, 70 nm or less, 61 nm or less, or 60 nm or less. For example, a relationship of "50 nm $\leq d_2 \leq$ 500 nm", "200 nm $\leq d_2 \leq$ 500 nm", "298 nm $\leq d_2 \leq$ 500 nm", "200 nm $\leq d_2 \leq$ 401 nm", or "200 nm $\leq d_2 \leq$ 298 nm" may be satisfied.

The average particle diameter of the first particle diameter (small particles 1a) "$d_1$" may be, for example, less than 50 nm, 45 nm or less, 40 nm or less, 35 nm or less, 30 nm or less, 25 nm or less, 20 nm or less, 15 nm or less, or 10 nm or less. The average particle diameter "$d_1$" may be, for example, 5 nm or more, 10 nm or more, 15 nm or more, 20 nm or more, 25 nm or more, 30 nm or more, 35 nm or more, 40 nm or more, or 45 nm or more. For example, a relationship of "5 nm $\leq d_1 <$ 50 nm", "10 nm $\leq d_1 \leq$ 40 nm", or "20 nm $\leq d_1 \leq$ 40 nm" may be satisfied.

The proportion of the number of the small particles 1a belonging to the first particle group "$n_1$" and the proportion of the number of the large particles 1b belonging to the second particle group "$n_2$" may satisfy a relationship of, for example, "0.5000 < $n_1/(n_1 + n_2)$ < 1.000". The number ratio of the small particles 1a "$n_1/(n_1 + n_2)$" may be, for example, 0.7500 or more, 0.7801 or more, 0.8000 or more, 0.8500 or more, 0.8889 or more, 0.9000 or more, 0.9500 or more, 0.9643 or more, 0.9921 or more, or 0.9976 or more. The number ratio of the small particles 1a "$n_1/(n_1 + n_2)$" may be, for example, 0.9990 or less, 0.9976 or less, 0.9921 or less, 0.9643 or less, 0.9500 or less, 0.9000 or less, 0.8889 or less, 0.8500 or less, 0.8000 or less, 0.7801 or less, or 0.7500 or less. For example, a relationship of "0.7000 < $n_1/(n_1 + n_2)$ < 1.000" or "0.7801 $\leq n_1/(n_1 + n_2) \leq$ 0.9990" may be satisfied.

The total mass of the small particles 1a belonging to the first particle group "$m_1$" and the total mass of the large particles 1b belonging to the second particle group "$m_2$" may satisfy a relationship of, for example, "0.1 $\leq m_1/(m_1 + m_2) \leq$ 0.9". The mass ratio of the small particles 1a "$m_1/(m_1 + m_2)$" may be, for example, 0.2 or more, 0.3 or more, 0.4 or more, 0.5 or more, 0.6 or more, 0.7 or more, or 0.8 or more. The mass ratio of the small particles 1a "$m_1/(m_1 + m_2)$" may be, for example, 0.8 or less, 0.7 or less, 0.6 or less, 0.5 or less, 0.4 or less, 0.3 or less, or 0.2 or less. A relationship of, for example, "0.2 $\leq m_1/(m_1 + m_2) \leq$ 0.8", "0.3 $\leq m_1/(m_1 + m_2) \leq$ 0.7", or "0.4 $\leq m_1/(m_1 + m_2) \leq$

0.6" may be satisfied.

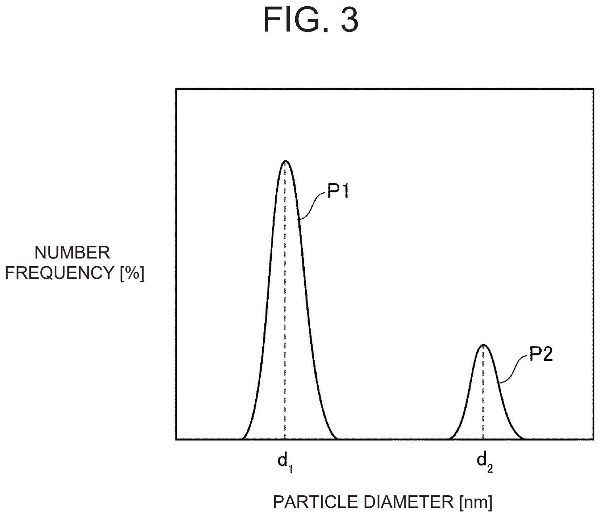

FIG. 3 shows an example of the number-based distribution of particle diameters of the primary particles. The horizontal axis and vertical axis of the histogram respectively represent a particle diameter and a number frequency. The number of peaks in the number-based distribution corresponds to the number of particle groups included in the secondary particle 2. The number-based distribution may be bimodal. That is, the number-based distribution may include at least a first peak P1 and a second peak P2.

The first peak P1 has a mode diameter "$d_1$". The second peak P2 has a mode diameter "$d_2$". The mode diameter "$d_2$" is larger than the mode diameter "$d_1$". That is, the first peak P1 is composed of the first particle group (small particles 1a). The second peak P2 is composed of the second particle group (large particles 1b). The mode diameter of each of the peaks may be regarded as the average particle diameter of each of the particle groups. The integrated value (area) of each of the peaks may correspond to the proportion of the number of the primary particles belonging to each of the peaks. For example, the integrated value of the first peak P1 may be regarded as the proportion of the number of the small particles 1a "$n_1$".

The number-based distribution may be multimodal. That is, the number-based distribution may include an additional peak in addition to the first peak P1 and the second peak P2. The additional peak may have, for example, a smaller mode diameter than the first peak P1. The additional peak may have, for example, a mode diameter larger than that of the first peak P1 and smaller than that of the second peak P2. The additional peak may have, for example, a larger mode diameter than the second peak P2. The additional peak may be, for example, a shoulder peak of the first peak. The additional peak may be, for example, a shoulder peak of the second peak.

Composition

The primary particles contain an olivine. The olivine has a crystal structure belonging to a space group Pnma. A space group to which the crystal structure belongs can be determined by an XRD (X-Ray Diffraction) pattern. The small particles 1a and the large particles 1b may have substantially the same composition or may have different compositions from each other as long as they contain the olivine.

The olivine may contain, for example, at least one selected from the group consisting of LFP, LMP, and LMFP. The olivine may contain, for example, at least one selected from the group consisting of LMP and LMFP. LMP and LMFP tend to have lower rate characteristics as compared to LFP. Therefore, when LMP and/or LMFP are/is contained, the primary particles are required to be much smaller as compared to when LFP is contained. The present embodiment is considered to be particularly suitable for LMP and LMFP.

The olivine may have a composition represented by, for example, a general formula of "$Li_aMn_{1-x}Fe_xPO_4$". In the general formula, an Li compositional ratio "a" may be, for example, 0.5 or more, 0.6 or more, 0.7 or more, 0.8 or more, 0.9 or more, 1.0 or more, 1.1 or more, 1.2 or more, 1.3 or more, or 1.4 or more. In the general formula, the Li compositional ratio "a" may be, for example, 2.0 or less, 1.5 or less, 1.4 or less, 1.3 or less, 1.2 or less, 1.1 or less, 1.0 or less, 0.9 or less, 0.8 or less, 0.7 or less, or 0.6 or less. In the general formula, a relationship of, for example, "$0.5 \leq a \leq 1.5$" may be satisfied. In the general formula, an Fe compositional ratio "x" may be, for example, 0 or more, 0.1 or more, 0.2 or more, 0.3 or more, 0.4 or more, 0.5 or more, 0.6 or more, 0.7 or more, 0.8 or more, or 0.9 or more. In the general formula, the Fe compositional ratio "x" may be, for example, 1.0 or less, 0.9 or less, 0.8 or less, 0.7 or less, 0.6 or less, 0.5 or less, 0.4 or less, 0.3 or less, 0.2 or less, or 0.1 or less. In the general formula, a relationship of, for example, "$0.2 \leq x \leq 0.5$" may be satisfied.

A dopant may be added to the olivine. The dopant refers to an element other than lithium (Li), manganese (Mn), iron (Fe), phosphorus (P), and oxygen (O). The amount of the dopant added (amount fraction relative to amount-of-substance of Li) may be, for example, 0.01 to 0.1. The dopant may contain, for example, at least one selected from the group consisting of boron (B), nitrogen (N), halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium(Tm), ytterbium (Yb), lutetium (Lu), and actinide.

A carbon material (not shown) may cover the primary particle. The carbon material may cover part of the surface of the primary particle or may cover the entire surface of the primary particle. The amount of the carbon material covering the primary particle may be different between the small particle 1a and the large particle 1b. The carbon material may be derived from, for example, sugar. The amount of the carbon material attached may be, for example, 0.1% or more, 0.5% or more, 1% or more, 2% or more, 3% or more, 4% or more, 5% or more, or 10% or more in terms of mass fraction relative to the secondary particle 2. The amount of the carbon material attached may be, for example, 20% or less, 15% or less, 10% or less, 5% or less, 4% or less, or 3% or less in terms of mass fraction relative to the secondary particle 2.

The positive electrode active material may further contain another component as long as it contains an olivine. The mixing ratio (mass ratio) between the olivine and the another component may be, for example, "olivine/another component = 9/1 to 1/9", "olivine/another component = 8/2 to 2/8", "olivine/another component = 7/3 to 3/7", or "olivine/another component = 6/4 to 4/6". The positive electrode active material may be, for example, a mixture of a powder of an olivine and a powder of another component. The another component may contain, for example, at least one selected from the group consisting of Li[NiCoMn]$O_2$ (layered structure), Li[NiCoAl]$O_2$ (layered structure), LiMn$O_2$ (rock salt structure), and Li[NiMn]$_2O_4$ (spinel structure). It should be noted that [NiCoMn] or the like indicates that the sum of the compositional ratios of elements in parentheses is 1. The compositional ratios of the individual elements in parentheses are not limited as long as the sum of them is 1.

Method for Producing Positive Electrode Active Material

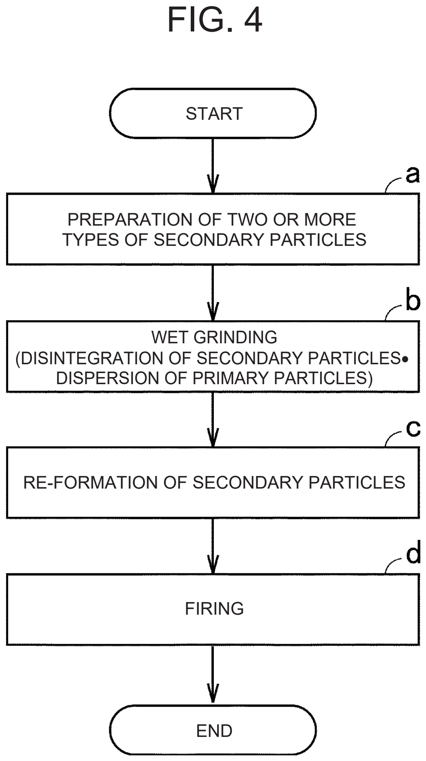

FIG. 4 is a schematic flowchart of a method for producing a positive electrode active material according to the present embodiment. Hereinbelow, the "method for producing a positive electrode active material according to the present embodiment" may be abbreviated as "present method". The present method includes step a, step b, and step c. The present method may further include step d. Step a means the step of preparing two or more types of secondary particles, step b means the step of wet grinding, step c means the step of re-forming secondary particles, and step d means the step of firing.

Step a

The present method includes preparing two or more types of secondary particles. Each of the two or more types of secondary particles contains an olivine. The two or more types of secondary particles are different from each other in their average particle diameter of primary particles. The two or more types of secondary particles may be prepared independently from each other. As an example, a method for synthesizing secondary particles of LMFP will be described. Step a may include step a1, step a2, step a3, and step a4. Step a1 means the step of blending, step a2 means the step of wet grinding, step a3 means the step of granulation, and step a4 means the step of firing.

Step a1

For example, a lithium compound, a manganese compound, an iron compound, a phosphoric acid compound, and a dispersing medium may be mixed to form a slurry. Each of the raw materials may be weighed in such a manner that a compositional ratio (amount-of-substance ratio) represented in a general formula of, for example, "$Li_aMn_{1-x}Fe_xPO_4$ ($0.5 \leq a \leq 1.5$, $0 < x < 1$)" is achieved. The lithium compound may contain, for example, lithium hydroxide. The manganese compound may contain, for example, manganese carbonate. The iron compound may contain, for example, ferric phosphate.

The phosphoric acid compound may contain, for example, lithium dihydrogen phosphate.

The slurry may be mixed with a carbon material. The carbon material may cover the surface of a primary particle. The carbon material may contain, for example, sugar or an organic acid. The carbon material may contain, for example, glucose, sucrose, fructose, or citric acid. The amount of the carbon material to be added may be, for example, 1% to 20% in terms of mass fraction relative to the total solid content.

The dispersing medium may contain, for example, water. The solid content concentration of the slurry may be, for example, 30% ± 20% in terms of mass fraction.

Step a2

The average particle diameter of primary particles may be adjusted by, for example, subjecting the slurry to wet grinding in a bead mill. That is, wet grinding is performed to allow the primary particles to have a desired average particle diameter. For example, wet grinding may be performed in such a manner that a D50 of about 0.30 μm is achieved.

Step a3

Secondary particles may be formed by, for example, spray-drying the slurry. The primary particles included in the secondary particles contain a precursor of LMFP.

Step a4

The secondary particles may be subjected to heat treatment to convert the precursor to LMFP. In the present method, any heat treatment furnace (e.g., an electric furnace or a muffle furnace) may be used. The atmosphere of the heat treatment may be, for example, a nitrogen atmosphere. The temperature of the heat treatment may be, for example, 400°C to 700°C. The time of the heat treatment may be, for example, 4 hours to 6 hours.

Two or more types of secondary particles are prepared by, for example, repeating step a1 to step a4 while changing the conditions of step a2. The two or more types of secondary particles are prepared so as to be different from each other in their average particle diameter of primary particles.

Step b

First, step b may include the step of disintegrating the secondary particles and dispersing the primary particles. The present method includes disintegrating each of the two or more types of secondary particles to the scale of the primary particles by wet grinding to form a slurry in which the primary particles are dispersed. For example, the two or more types of secondary particles may be subjected to wet grinding separately from each other to form two or more slurries. Then, the slurries may be mixed. Alternatively, the two or more types of secondary particles may be subjected to wet grinding together to form one slurry. In either case, two or more types of primary particles different from each other in average particle diameter may be dispersed in each other in the slurry. The solid content concentration of the slurry may be, for example, 5% to 50% in terms of mass fraction.

The wet grinding is performed in such a manner that the secondary particles are disintegrated to the scale of the primary particles and the primary particles are dispersed. The wet grinding may be performed by, for example, a bead mill. The diameter of beads is selected based on the size of the primary particles. The time of grinding is adjusted in such a manner that the secondary particles are disintegrated to the scale of the primary particles and the primary particles are dispersed. However, the time of grinding is adjusted to be as short as possible to prevent the primary particles from being ground. For example, if the primary particles are ground so that overdispersion occurs, the difference in average particle diameter between the two or more types of primary particles may not be adjusted within a desired range. It should be noted that in the case of a jet mill, grinding is performed by collision between particles to be ground. Therefore, a jet mill tends to be lower in grinding power than a bead mill using beads as grinding media. It is therefore considered that it is difficult for a jet mill to achieve a dispersion state on the scale of primary particles.

Step c

The present method includes spray-drying the slurry to form secondary particles. The spray drying may be performed in the same manner as in, for example, step a3.

Step d

The present method may include subjecting the secondary particles to heat treatment. The heat treatment may be performed in the same manner as in, for example, step a4.

Liquid-Based Battery

In some present embodiments, a battery may be a liquid-based battery. The "liquid-based battery" refers to a battery including an electrolytic solution. For example, a polymer battery includes an electrolytic solution and therefore belongs to liquid-based batteries. In some present embodiments, the battery has a monopolar structure. In the monopolar structure, a power-generating element may be of a wound type or a lamination type. In some present embodiments, the battery has a bipolar structure. As an example, a battery having a bipolar structure (bipolar battery) will be described.

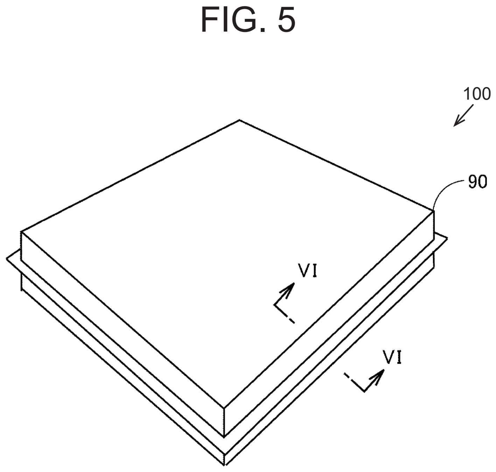

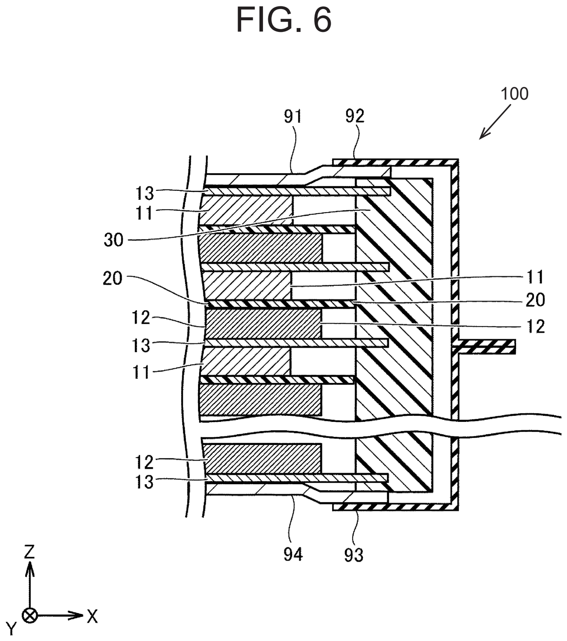

FIG. 5 is a schematic perspective view of a battery according to the present embodiment. FIG. 6 is a schematic sectional view taken along the line VI-VI shown in FIG.5. Hereinafter, a "perpendicular direction" refers to a normal direction relative to the surface of a sheet-shaped member (e.g., a foil or an electrode). An "in-plane direction" refers to any direction orthogonal to the perpendicular direction. In the diagram of the present embodiment, a Z-axis direction corresponds to the perpendicular direction. An X-axis direction and a Y-axis direction are examples of the in-plane direction.

A battery 100 includes an exterior body 90 and a power-generating element. The exterior body 90 houses the power-generating element. The exterior body 90 may include, for example, a first current collector plate 91, a first laminate film 92, a second laminate film 93, and a second current collector plate 94. The first laminate film 92 and the second laminate film 93 are joined together around their ends in the in-plane direction. At the joint between the first laminate film 92 and the second laminate film 93, a sealing material (not shown) may be interposed between the first laminate film 92 and the second laminate film 93.

The first current collector plate 91 and the second current collector plate 94 are joined to the power-generating element at their ends in a lamination direction (Z-axis direction). The first laminate film 92 is joined to the first current collector plate 91. The second laminate film 93 is joined to the second current collector plate 94. At the joint between the current collector plate and the laminate film, a sealing material (not shown) may be interposed between the current collector plate and the laminate film.

The power-generating element includes a plurality of bipolar electrodes. The bipolar electrodes are laminated in the perpendicular direction (Z-axis direction). Each of the bipolar electrodes includes a positive electrode layer 11, a current collector foil 13, and a negative electrode layer 12 in this order in the perpendicular direction. In the in-plane direction, (e.g., in the X-axis direction), the current collector foil 13 extends outward beyond the positive electrode layer 11 and the negative electrode layer 12. For example, the current collector foil 13 may extend outward beyond the positive electrode layer 11 and the negative electrode layer 12 around its entire periphery in the in-plane direction.

The current collector foil 13 is conductive. The current collector foil 13 may include, for example, a metallic foil or an electrically-conductive resin layer. For example, the current collector foil 13 may be formed by bonding together an Al foil and a Cu foil. A carbon material may be applied onto the surface of the current collector foil 13. The carbon material may contain, for example, carbon black.

The power-generating element includes a sealing material 30. The sealing material 30 is joined to the current collector foils 13 at its end in the in-plane direction. For example, the sealing material 30 may be thermally welded to the current collector foils 13. For example, the sealing material 30 may be disposed along the entire periphery in the in-plane direction. The sealing material 30 may contain, for example, a resin material. The sealing material 30 seals spaces between the current collector foils 13 adjacent to each other in the perpendicular direction. Cells are formed by sealing the spaces between the current collector foils 13 with the sealing material 30. The cells are minimum units of the power-generating element. The battery 100 includes the cells and therefore may also be referred to as a "bipolar module". Each of the cells is hermetically sealed. The cells are isolated from each other. Each of the cells includes the positive electrode layer 11, a separator 20, the negative electrode layer 12, and an electrolytic solution.

Positive Electrode Layer

The positive electrode layer 11 is attached to one side of the current collector foil 13. For example, the positive electrode layer 11 may have a groove. The positive electrode layer 11 may be formed, for example, in stripes. The thickness of the positive electrode layer 11 may be, for example, 50 $\mu$m or more, 100 $\mu$m or more, 150 $\mu$m or more, 200 $\mu$m or more, 300 $\mu$m or more, 400 $\mu$m or more, 500 $\mu$m or more, 600 $\mu$m or more, 700 $\mu$m or more, 800 $\mu$m or more, or 900 $\mu$m or more. The thickness of the positive electrode layer 11 may be, for example, 1000 $\mu$m or less, 900 $\mu$m or less, 800 $\mu$m or less, 700 $\mu$m or less, 600 $\mu$m or less, 500 $\mu$m or less, 400 $\mu$m or less, 300 $\mu$m or less, or 200 $\mu$m or less.

The positive electrode layer 11 contains a positive electrode active material. That is, the battery 100 includes a positive electrode active material. The details of the positive electrode active material are as described above. The positive electrode layer 11 may further contain, for example, an electrically-conductive material and a binder in addition to the positive electrode active material. The amount of the electrically-conductive material to be added may be, for example, 0.1 to 10 parts by mass per 100 parts by mass of the positive electrode active material. The electrically-conductive material may contain any component. For example, the electrically-conductive material may contain at least one selected from the group consisting of graphite, acetylene black (AB), ketjen black (registered trademark), vapor-grown carbon fibers (VGCFs), carbon nanotubes (CNTs), and graphene flakes (GFs).

The amount of the binder to be added may be, for example, 0.1 to 10 parts by mass per 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinyl pyrrolidone (PVP), polyoxyethylene alkyl ether, and derivatives thereof.

The positive electrode layer 11 may further contain, for example, an inorganic filler, an organic filler, a solid electrolyte, a surface modifier, a dispersant, a lubricant, a flame retardant, a protective agent, a flux, a coupling agent, or an adsorbent. The positive electrode layer may contain, for example, polyoxyethylene allyl phenyl ether phosphate, zeolite, a silane coupling agent, $MoS_2$, or $WO_3$.

Negative Electrode Layer

The negative electrode layer 12 is attached to one side of the current collector foil 13. The negative electrode layer 12 is disposed on the back of the positive electrode layer 11. The negative electrode layer 12 may have a larger area than the positive electrode layer 11. The thickness of the negative electrode layer 12 may be, for example, 50 $\mu$m or more, 100 $\mu$m or more, 150 $\mu$m or more, 200 $\mu$m or more, 300 $\mu$m or more, 400 $\mu$m or more, 500 $\mu$m or more, 600 $\mu$m or more, 700 $\mu$m or more, 800 $\mu$m or more, or 900 $\mu$m or more. The thickness of the negative electrode layer 12 may be, for example, 1000 $\mu$m or less, 900 $\mu$m or less, 800 $\mu$m or less, 700 $\mu$m or less, 600 $\mu$m or less, 500 $\mu$m or less, 400 $\mu$m or less, 300 $\mu$m or less, or 200 $\mu$m or less.

The negative electrode layer 12 contains a negative electrode active material. The negative electrode active material may be, for example, in a particulate or sheet form. The D50 of the negative electrode active material may be, for example, 1 $\mu$m or more, 5 $\mu$m or more, or 10 $\mu$m or more. The D50 of the negative electrode active material may be, for example, 30 $\mu$m or less, 20 $\mu$m or less, 15 $\mu$m or less, or 10 $\mu$m or less.

The negative electrode active material may contain any component. The negative electrode active material may contain, for example, at least one selected from the group consisting of a carbon-based active material, an alloy-based active material, an Si-C-composite material, Li metal, an Li-based alloy, and lithium titanate. In some present embodiments, the battery may be an Li metal negative electrode battery.

The carbon-based active material may contain, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2", or "natural graphite/artificial graphite = 3/7 to 7/3".

The surface of the graphite may be covered with, for example, amorphous carbon. The surface of the graphite may be covered with, for example, another type of material. The another type of material may contain, for example, at least one selected from the group consisting of P, W, Al, and O. The another type of material may contain, for example, at least one selected from the group consisting of $Al(OH)_3$, AlOOH, $Al_2O_3$, $WO_3$, $Li_2CO_3$, $LiHCO_3$, and $Li_3PO_4$.

The alloy-based active material may contain, for example, at least one selected from the group consisting of Si, Li silicate, SiO, an Si-based alloy, tin (Sn), SnO, and an Sn-based alloy.

The SiO may have a composition represented by, for example, a general formula of "$SiO_x$". In the general formula, a relationship of, for example, "$0 < x < 2$", "$0.5 \leq x \leq 1.5$", or "$0.8 \leq x \leq 1.2$" may be satisfied.

The "Si-C composite material" refers to a composite material of a carbon-based active material (e.g., graphite) and an alloy-based active material (e.g., Si). For example, Si microparticles may be dispersed in carbon particles. For example, Si microparticles may be dispersed in graphite particles. For example, Li silicate particles may be coated with a carbon material (e.g., amorphous carbon).

Separator

The separator 20 can separate the positive electrode layer 11 from the negative electrode layer 12. The separator 20 is electrically insulative. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film or a non-woven fabric. The resin film has a resin skeleton. The resin skeleton may be, for example, continuous in a net-like way. Gaps in the resin skeleton form pores. The resin film allows an electrolytic solution to pass through it. The resin film may have an average pore diameter of, for example, 1 $\mu$m or less. The average pore diameter of the resin film may be, for example, 0.01 $\mu$m to 1 $\mu$m or 0.1 $\mu$m to 0.5 $\mu$m. The "average pore diameter" can be measured by mercury intrusion porosimetry. The resin film may have a Gurley value of, for example, 50 s/100 cm$^3$ to 250 s/100 cm$^3$. The Gurley value can be measured by a Gurley test method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The resin film may have a thickness of, for example, 5 $\mu$m to 50 $\mu$m or 10 $\mu$m to 25 $\mu$m.

The resin film may have, for example, a single-layer structure. The resin film may consist of, for example, a PE layer. The skeleton of the PE layer is formed of PE. The PE layer can have a shut-down function. The resin film may have, for example, a multilayer structure. The resin film may include, for example, a PP layer and a PE layer. The skeleton of the PP layer is formed of PP. The resin film may have, for example, a three-layer structure. The resin film may be formed by, for example, laminating a PP layer, a PE layer, and a PP layer in this order. The PE layer may have a thickness of, for example, 5 $\mu$m to 20 $\mu$m. The PP layer may have a thickness of, for example, 3 $\mu$m to 10 $\mu$m.

The inorganic particle layer may be formed on the surface of the resin film. The inorganic particle layer may be formed on only one side of the resin film or may be formed on both sides of the resin film. The inorganic particle layer may be formed on the side facing the positive electrode layer 11 or may be formed on the side facing the negative electrode layer 12. It should be noted that the inorganic particle layer may be formed on the surface of the positive electrode layer 11 or may be formed on the surface of the negative electrode layer 12.

The inorganic particle layer is porous. The inorganic particle layer contains inorganic particles. The inorganic particles may also be referred to as an "inorganic filler". Gaps between the inorganic particles form pores. The inorganic particle layer may have a thickness of, for example, 0.5 $\mu$m to 10 $\mu$m or 1 $\mu$m to 5 $\mu$m. The inorganic particles may contain, for example, a heat-resistant material. The inorganic particle layer containing a heat-resistance material is also referred to as "HRL (Heat Resistance Layer)". The inorganic particles may contain at least one selected from the group consisting of boehmite, alumina, zirconia, titania, magnesia, and silica. The inorganic particles may have any shape. For example, the inorganic particles may be spherical, rod-like, plate-like, or fibrous. The inorganic particles may have a D50 of, for example, 0.1 $\mu$m to 10 $\mu$m or 0.5 $\mu$m to 3 $\mu$m. The inorganic particle layer may further contain a binder. The binder may contain, for example, at least one selected from the group consisting of an acrylic resin, a polyamide-based resin, a fluorine-based resin, an aromatic polyether-based resin, and a liquid crystalline polyester-based resin.

The separator 20 may include, for example, an organic particle layer. The separator 20 may include, for example, an organic particle layer instead of the resin film. The separator 20 may include, for example, an organic particle layer instead of the inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The organic particle layer may have a thickness of, for example, 0.1 $\mu$m to 50 $\mu$m, 0.5 $\mu$m to 20 $\mu$m, 0.5 $\mu$m to 10 $\mu$m, or 1 $\mu$m to 5 $\mu$m. The organic particle layer contains organic particles. The organic particles may also be referred to as an "organic filler". The organic particles may contain a heat-resistant material. The organic particles may contain, for example, at least one selected from the group consisting of PE, PP, PTFE, PI, PAI, PA, and aramid. The organic particles may be, for example, spherical, rod-like, plate-like, or fibrous. The organic particles may have a D50 of, for example, 0.1 $\mu$m to 10 $\mu$m or 0.5 $\mu$m to 3 $\mu$m.

The separator 20 may include, for example, a mixed layer. The mixed layer contains both inorganic particles and organic particles.

Electrolytic Solution

The electrolytic solution is a liquid electrolyte. The electrolytic solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. "mol/L" may also be written as "M". The solute contains a supporting salt (Li salt). The solute may contain, for example, an inorganic acid salt, an imide salt, an oxalato complex, or a halide. The solute may contain, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives thereof.

The electrolytic solution may contain, for example, a carbonate-based solvent (carbonic ester-based solvent). The solvent may contain, for example, a cyclic carbonate, a chain carbonate, or a fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain a cyclic carbonate (e.g., EC, PC, or FEC) and a chain carbonate (e.g., EMC, DMC, or DEC). The mixing ratio (volume ratio) between the cyclic carbonate and the chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain a cyclic carbonate (e.g., EC or PC) and a fluorinated cyclic carbonate (e.g., FEC). The mixing ratio (volume ratio) between the cyclic carbonate and the fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/-

fluorinated cyclic carbonate = 3/7 to 1/9".

The solvent may contain, for example, EC, FEC, EMC, DMC, and DEC. The volume ratios of the respective components may satisfy a relationship represented by a relational expression of "$V_{EC} + V_{FEC} + V_{EMC} + V_{DMC} + V_{DEC} = 10$". In the relational expression, "$V_{EC}$, $V_{FEC}$, $V_{EMC}$, $V_{DMC}$, and $V_{DEC}$" respectively represent the volume ratios of EC, FEC, EMC, DMC, and DEC. The following relationships are satisfied: "$1 \leq V_{EC} \leq 4$", "$0 \leq V_{FEC} \leq 3$", "$V_{EC} + V_{FEC} \leq 4$", "$0 \leq V_{EMC} \leq 9$", "$0 \leq V_{DMC} \leq 9$", "$0 \leq V_{DEC} \leq 9$", "$6 \leq V_{EMC} + V_{DMC} + V_{DEC} \leq 9$". For example, a relationship of "$1 \leq V_{EC} \leq 2$" or "$2 \leq V_{EC} \leq 3$" may be satisfied. For example, a relationship of "$1 \leq V_{FEC} \leq 2$" or "$2 \leq V_{FEC} \leq 4$" may be satisfied. For example, a relationship of "$3 \leq V_{EMC} \leq 4$" or "$6 \leq V_{EMC} \leq 8$" may be satisfied. For example, a relationship of "$3 \leq V_{DMC} \leq 4$" or "$6 \leq V_{DMC} \leq 8$" may be satisfied. For example, a relationship of "$3 \leq V_{DEC} \leq 4$" or "$6 \leq V_{DEC} \leq 8$" may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in terms of volume ratio.

The electrolytic solution may contain an ether-based solvent. The electrolytic solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolytic solution may contain any additive. The amount of the additive to be added (the mass fraction of the additive relative to the total mass of the electrolytic solution) may be, for example, 0.01% to 5%, 0.05% to 3%, or 0.1% to 1%. The additive may contain, for example, an SEI (Solid Electrolyte Interphase) formation promoter, an SEI formation inhibitor, a gas-forming agent, an overcharging inhibitor, a flame retardant, an antioxidant, an electrode protective agent, or a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), ethylene sulfate (DTD), γ-butyrolactone, a phosphazene compound, a carboxylic ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene], fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphoric ester (e.g., trimethyl phosphate or triethyl phosphate), a carboxylic anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The component described above as a solute or a solvent may be used as a trace component (additive). The additive may contain, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolytic solution may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolytic solution and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

ALL-Solid-State Battery

In some present embodiments, the battery may be an all-solid-state battery. The all-solid-state battery may have a bipolar structure. The all-solid-state battery includes a solid electrolyte instead of the electrolytic solution and the separator 20. The solid electrolyte may be contained also in the positive electrode layer 11 and the negative electrode layer 12. Instead of the separator 20, a solid electrolyte layer separates the negative electrode layer 12 from the positive electrode layer 11. The solid electrolyte layer contains, for example, a solid electrolyte and a binder.

The solid electrolyte may be, for example, a powder. The solid electrolyte may have a D50 of, for example, 0.1 μm or more, 0.2 μm or more, 0.3 μm or more, 0.4 μm or more, 0.5 μm or more, 0.6 μm or more, 0.7 μm or more, 0.8 μm or more, 0.9 μm or more, or 1 μm

or more. The solid electrolyte may have a D50 of, for example, 5 μm or less, 4 μm or less, 3 μm or less, 2 μm or less, or 1 μm or less.

The solid electrolyte may contain, for example, at least one selected from the group consisting of a sulfide solid electrolyte, a halide solid electrolyte, an oxide solid electrolyte, a hydride solid electrolyte, and a nitride solid electrolyte.

The sulfide solid electrolyte may contain at least one selected from the group consisting of an amorphous phase, a crystalline phase, and a glass ceramic (crystallized glass) phase. The crystalline phase may be of, for example, an argyrodite type or an LGPS type. The sulfide solid electrolyte contains Li and sulfur (S). The sulfide solid electrolyte may further contain any component in addition to Li and S.

The sulfide solid electrolyte may contain, for example, at least one selected from the group consisting of LiI-LiBr-$Li_3PS_4$, $Li_2S$-$SiS_2$, LiI-$Li_2S$-$SiS_2$, LiI-$Li_2S$-$P_2S_5$, LiI-$Li_2O$-$Li_2S$-$P_2S_S$, LiI-$Li_2S$-$P_2O_5$, LiI-$Li_3PO_4$-$P_2S_5$, $Li_2S$-$GeS_2$-$P_2S_5$, $Li_2S$-$P_2S_5$, $Li_{10}GeP_2S_{12}$, $Li_4P_2S_6$, $Li_7P_3S_{11}$, $Li_3PS_4$, and $LI_7PS_6$.

For example, "LiI-LiBr-$Li_3PS_4$" refers to a sulfide solid electrolyte generated by mixing LiI, LiBr, and $Li_3PS_4$ in any amount-of-substance ratio. For example, the sulfide solid electrolyte may be generated by a mechanochemical method. A mixing ratio may be specified by placing a numeral in front of each of the raw materials. For example, "10LiI-15LiBr-75$Li_3PS_4$" indicates that the mixing ratio is "LiI/LiBr/$Li_3PS_4$ = 10/15/75 (amount-of-substance ratio)".

The sulfide solid electrolyte may have a composition represented by, for example, a general formula of "$xLi_2S$-$(1-x)P_2S_5$". In the general formula, "x" may be, for example, more than 0, 0.1 or more, 0.2 or more, 0.25 or more, 0.3 or more, 0.4 or more, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, 0.6 or less, 0.5 or less, 0.4 or less, 0.3 or less, 0.2 or less, or 0.1 or less. For example, when "x = 0.75", "$xLi_2S$-$(1-x)P_2S_5$" may have a composition of $Li_3PS_4$.

The sulfide solid electrolyte may have a composition represented by, for example, a general formula of "$yLiI$-$zLiBr$-$(100-y-z)[xLi_2S$-$(1-x)P_2S_5]$". In the general formula, "x" may be, for example, 0.5 or more, 0.6 or more, 0.7 or more, 0.75 or more, 0.8 or more, or 0.9 or more. "x" may be, for example, 1 or less, 0.9 or less, 0.8 or less, 0.75 or less, 0.7 or less, or 0.6 or less. "y" may be, for example, 0 or more, 5 or more, 10 or more, 15 or more, 20 or more, or 25 or more. "y" may be, for example, 30 or less, 25 or less, 20 or less, 15 or less, 10 or less, or 5 or less. "z" may be, for example, 0 or more, 5 or more, 10 or more, 15 or more, 20 or more, or 25 or more. "z" may be, for example, 30 or less, 25 or less, 20 or less, 15 or less, 10 or less, or 5 or less.

The sulfide solid electrolyte may have a composition represented by, for example, a general formula of "$Li_{7-x-2y}PS_{6-x-y}X_y$". In the general formula, relationships of "0 < 7 - x - 2y", "0 < 6 - x - y", "0 ≤ x", and "0 ≤ y" are satisfied. "X" may contain, for example, at least one selected from the group consisting of fluorine (F), chlorine (Cl), bromine (Br), and iodine (I).

The sulfide solid electrolyte may have a composition represented by, for example, a general formula of "$Li_{4-x}M_{1-x}P_xS_4$". In the general formula, "x" may be, for example, more than 0, 0.1 or more, 0.2 or more, 0.3 or more, 0.4 or more, 0.5 or more, 0.6 or more, 0.7 or more, 0.8 or more, or 0.9 or more. "x" may be, for example, less than 1, 0.9 or less, 0.8 or less, 0.7 or less, 0.6 or less, 0.5 or less, 0.4 or less, 0.3 or less, 0.2 or less, or 0.1 or less. "M" may contain, for example, at least one selected from the group consisting of Al, Zn, In, Ge, Si, Sn, Sb, Ga, and Bi.

The sulfide solid electrolyte may have a composition represented by, for example, a general formula of "$Li_{10+x}Ge_{1+x}P_{2-x}S_{12}$". In the general formula "x" may be, for example, 0 or more, 0.1 or more, 0.2 or more, 0.3 or more, 0.4 or more, 0.5 or more, or 0.6 or more. "x" may be, for example, 0.7 or less, 0.6 or less, 0.5 or less, 0.4 or less, 0.3 or less, 0.2 or less, or 0.1 or less. The sulfide solid electrolyte represented by the above general formula may contain, for example, an LGPS-type crystalline phase.

The halide solid electrolyte may have a composition represented by, for example, a general formula of "$Li_{6-na}M_aX_6$". In the general formula, "n" represents the oxidation number of "M". "M" may contain, for example, an atom having an oxidation number of +3. "M" may contain, for example, an atom having an oxidation number of +4. "M" may contain, for example, at least one selected from the group consisting of Y, Al, Ti, Zr, Ca, and Mg. For example, a relationship of "0 < a < 2" may be satisfied. "X" may contain, for example, at least one selected from the group consisting of F, Cl, Br, and I.

The halide solid electrolyte may have a composition represented by, for example, a general formula of "$Li_{3-a}Ti_aAl_{1-a}F_6$". In the general formula, "a" may be, for example, 0 or more, 0.1 or more, 0.2 or more, 0.3 or more, 0.4 or more, 0.5 or more, 0.6 or more, 0.7 or more, 0.8 or more, or 0.9 or more. "a" may be, for example, 1 or less, 0.9 or less, 0.8 or less, 0.7 or less, 0.6 or less, 0.5 or less, 0.4 or less, 0.3 or less, 0.2 or less, or 0.1 or less.

The halide solid electrolyte may have a composition represented by, for example, a general formula of "$Li_3YCl_aBr_bI_{6-a-b}$". In the general formula, a relationship of, for example, "0 ≤ a + b ≤ 6" may be satisfied. "a" may be, for example, 0 or more, 1 or more, 2 or more, 3 or more, 4 or more, or 5 or more. "a" may be, for example, 6 or less, 5 or less, 4 or less, 3 or less, 2 or less, or 1 or less. "b" may be, for example, 0 or more, 1 or more, 2 or more, 3 or more, 4 or more, or 5 or more. "b" may be, for example, 6 or less, 5 or less, 4 or less, 3 or less, 2 or less, or 1 or less.

The oxide solid electrolyte may contain at least one selected from the group consisting of $LiNbO_3$,

$Li_{1.5}Al_{0.5}Ge_{1.5}(PO_4)_3$, $La_{2/3-x}Li_{3x}TiO_3$, and $Li_7La_3Zr_2O_{12}$. The hydride solid electrolyte may contain, for example, $LiBH_4$. The nitride solid electrolyte may contain, for example, $Li_3N$ or $Li_3BN_2$.

## Preparation of Samples

### No. 1

A positive electrode active material of No. 1 was produced according to the following procedure. It should be noted that with regard to the production method, step a, step b, step c, and step d are the same as those described above. Further, with regard to the production method, step a1, step a2, step a3, and step a4 are also the same as those described above.

### Step a

### Step a1

Lithium hydroxide monohydrate, manganese carbonate, ferric phosphate, and lithium dihydrogen phosphate are weighed in such a manner that a compositional ratio shown in a composition formula of "$Li_{1.04}Mn_{0.6}Fe_{0.4}PO_4$" is achieved. Glucose is weighed in an amount of 8% in terms of mass fraction relative to the total mass of the raw materials. The weighed materials and water are mixed to form a slurry. The solid content concentration of the slurry is 30% ± 20% in terms of mass fraction.

### Step a2

The slurry is subjected to wet grinding in a bead mill to adjust the average particle diameter of a dispersoid (primary particles).

### Step a3

The slurry is spray-dried by a spray drier to form secondary particles. The secondary particles contain a precursor of LMFP. A target value of D50 of the secondary particles (powder) is 9 μm ± 5 μm. The settings of the spray drier are as follows.

    Air inlet temperature: 250°C
    Air outlet temperature: 115°C ± 15°C
    Intake pressure: 2.0 MPa
    Nozzle pressure of spray nozzle: 0.2 ± 0.1 MPa

### Step a4

The secondary particles are placed in a firing furnace. The atmosphere in the furnace is a nitrogen atmosphere. The temperature in the furnace is increased to 200°C at a temperature increase rate of 3°C/min. The temperature in the furnace is maintained at 200°C for 1 hour. Then, the temperature in the furnace is increased to 650°C at a temperature increase rate of 5°C/min. The temperature in the furnace is maintained at 650°C for 5 hours. Then, the temperature in the furnace is decreased to 400°C at a temperature decrease rate of 2°C/min. Then, the temperature in the furnace is decreased to room temperature at a temperature decrease rate of 15°C/min. As a result, the precursor is converted to LMFP.

Two types of secondary particles are prepared according to the above procedure. The average particle diameter of primary particles of each of the two types of secondary particles is measured. The average particle diameter of primary particles of one of the two types of secondary particles (first particle group) is 40 nm. The average particle diameter of primary particles of the other type of secondary particles (second particle group) is 61 nm.

### Step b

The two types of secondary particles and water are mixed to form a slurry. The solid content concentration of the slurry is 5% to 50% in terms of mass fraction. The slurry is subjected to wet grinding in a bead mill. Grinding conditions are as follows.

    Amount of slurry to be processed: 1.5 kg
    Bead diameter: 0.1 mm
    Grinding time: 10 min
    Circumferential velocity of mill: 13 m/s

### Step c

The slurry is spray-dried by a spray drier to form secondary particles. The settings of the spray drier are the same as those described above with reference to step a3.

### Step d

The secondary particles are subjected to heat treatment. The conditions of the heat treatment are the same as those described above with reference to step a4.

### No. 2 to No. 6

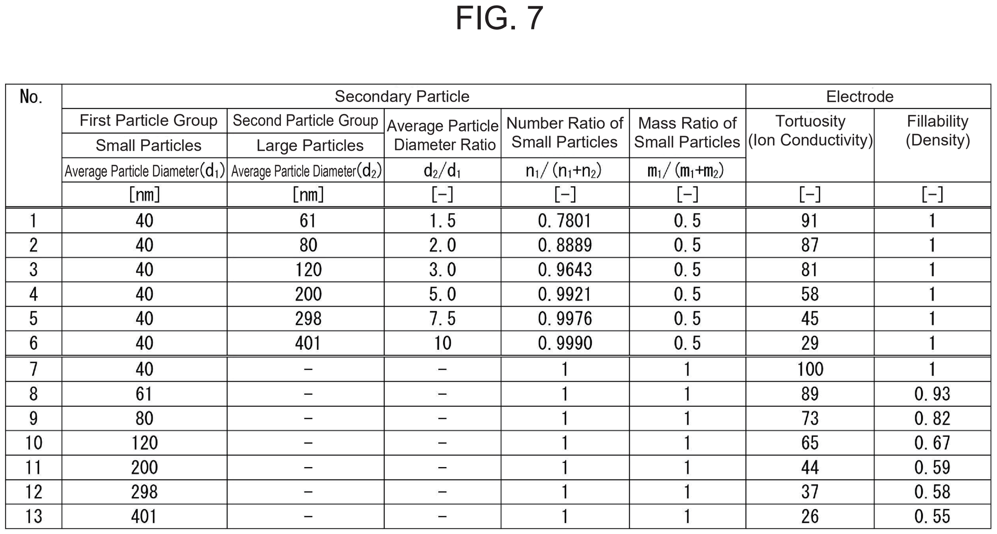

FIG. 7 is a table showing experimental results. As shown in FIG. 7, positive electrode active materials were produced in the same manner as in No. 1 except that the average particle diameter of primary particles of the other type of secondary particles was changed. Grinding conditions are adjusted within their respective ranges described below.

    Bead diameter: 3 mm to 0.1 mm
    Grinding time: 10 min or longer but as short as possible to prevent a change in the particle diameters of primary particles
Circumferential velocity of mill: 8 m/s to 14 m/s

It should be noted that in the cases of No. 3 to No. 6 having a large average particle diameter ratio, two types of slurries were subjected to wet grinding separately and then mixed.

No. 7 to No. 13

As shown in FIG. 7, secondary particles of one type prepared in step a were directly used as a positive electrode active material.

Evaluations

Each of the samples was evaluated according to the following procedures.

Production of Electrode

A positive electrode active material, an electrically-conductive material (acetylene black), and a binder (PVdF) are mixed to form a mixture. The mixing ratio (mass ratio) among them is "positive electrode active material/electrically-conductive material/binder = 92/5/3". The mixture is dispersed in a dispersing medium (N-methyl-2-pyrrolidone) to form a paste. The solid content concentration of the paste is 50% in terms of mass fraction. The paste is applied onto the surface of an Al foil and dried to form a positive electrode layer. The positive electrode layer is compressed by roll press to form a raw sheet. The raw sheet is subjected to vacuum drying at 120°C for 12 hours. After drying, an electrode (diameter: 14 mm) is punched out from the raw sheet.

Fillability

The conditions of the roll-pressing are common to the respective samples. The achieved density of the positive electrode layer of No. 7 is 1.8 g/cm$^3$. The "fillability" shown in FIG. 7 refers to the density of each of the samples. The density shown in FIG. 7 is a relative value when the density of No. 7 is taken as 1.

Tortuosity

Two uncharged electrodes are prepared. The electrodes are laminated in such a manner that positive electrode layers face each other to form a laminated body. The laminated body and an electrolytic solution are housed in a coin-type case to produce a coin cell. The impedance measurement of the coin cell is performed under the following conditions.

SOC: 50%
Frequency range: 100000 to 0.01 Hz
Temperature: 25°C

Voltage amplitude "$\Delta V$": $\pm 5$ mV

The result of the impedance measurement is analyzed by analysis software "ZView (registered mark)" to calculate a solution resistance "$R_{ion}$". Further, the effective conductivity of the electrolytic solution "$\kappa^{eff}_{pos}$" is calculated by the following formula.

$$\kappa^{eff}_{pos} = L/(S \cdot R_{ion})$$

L: Film thickness
S: Product of area of electrode and void ratio of electrode

A porosity "$\varepsilon$" is calculated from the design value of the electrode. A tortuosity "$\tau$" is calculated by the following formula.

$$\tau = (K \cdot \varepsilon) / \kappa^{eff}_{pos}$$

K: Electric conductivity of bulk electrolytic solution
The tortuosity shown in FIG. 7 is a relative value when the value of tortuosity of No. 7 is taken as 100.

Results

As can be seen from the results of No. 7 to No. 13 shown in FIG. 7, when the primary particles constituting the secondary particles are monomodal, the tortuosity tends to improve as the size of the primary particles increases. On the other hand, the density decreases as the size of the primary particles increases.
As can be seen from the results of No. 1 to No. 6 shown in FIG. 7, when the primary particles constituting the secondary particles are bimodal, the tortuosity tends to improve as the average particle diameter ratio "$d_2/d_1$" increases. Even when the size of the large particles (primary particles) increases, the density is maintained.
As can be seen from the results of No. 1 to No. 6 shown in FIG. 7, when a relationship of "$1.5 \leq d_2/d_1 \leq 10$" is satisfied, the tortuosity tends to improve.
As can be seen from the results of No. 1 to No. 6 shown in FIG. 7, when a relationship of "$3.0 \leq d_2/d_1$" is satisfied, the tortuosity tends to improve.
As can be seen from the results of No. 1 to No. 6 shown in FIG. 7, when a relationship of "$5.0 \leq d_2/d_1$" is satisfied, the tortuosity tends to improve.
As can be seen from the results of No. 1 to No. 6 shown in FIG. 7, when a relationship of "$200 \text{ nm} \leq d_2$" is satisfied, the tortuosity tends to improve.
As can be seen from the results of No. 1 to No. 6 shown in FIG. 7, when a relationship of "$0.7000 < n_1/(n_1 + n_2) < 1.000$" is satisfied, the tortuosity tends to improve.
As can be seen from the results of No. 1 to No. 6 shown in FIG. 7, when a relationship of "$0.4 \leq m_1/(m_1 + m_2) \leq 0.6$" is satisfied, the tortuosity tends to improve.
From the results of No. 7 to No. 13 shown in FIG.

7, it is considered that when the large particles form primary aggregates in the secondary particles, the density reduces and therefore it is difficult to achieve both the tortuosity and the fillability even when the primary particles constituting the secondary particles are bimodal.

Supplementary Notes

The present disclosure also provides positive electrode active materials that will be described below.

Supplementary Note 1

A positive electrode active material including a secondary particle, wherein:

the secondary particle includes primary particles;
the primary particles contain an olivine-type phosphate compound;
a number-based distribution of particle diameters of the primary particles includes a first peak and a second peak;
the second peak has a larger mode diameter than the first peak; and
the primary particles belonging to the first peak and the primary particles belonging to the second peak are dispersed in each other in the secondary particle.

Supplementary Note 2

The positive electrode active material according to supplementary note 1, wherein:

the number-based distribution satisfies a relationship of $1.5 \leq d_2/d_1 \leq 10$;
the $d_1$ represents a mode diameter of the first peak; and
the $d_2$ represents a mode diameter of the second peak.

Supplementary Note 3

The positive electrode active material according to supplementary note 2, wherein the number-based distribution satisfies a relationship of $3.0 \leq d_2/d_1$.

Supplementary Note 4

The positive electrode active material according to supplementary note 3, wherein the number-based distribution satisfies a relationship of $5.0 \leq d_2/d_1$.

Supplementary Note 5

The positive electrode active material according to supplementary note 2, wherein the number-based distribution satisfies a relationship of $200 \text{ nm} \leq d_2 \leq 500 \text{ nm}$.

Supplementary Note 6

The positive electrode active material according to any one of supplementary notes 1 to 5, wherein:

the number-based distribution satisfies a relationship of $0.7000 < n_1/(n_1 + n_2) < 1.000$;
the $n_1$ represents an integrated value of the first peak; and
the $n_2$ represents an integrated value of the second peak.

**Claims**

1. A positive electrode active material comprising a secondary particle (2), wherein:

   the secondary particle (2) includes a first particle group and a second particle group;
   each of the first particle group and the second particle group is composed of primary particles;
   the primary particles contain an olivine-type phosphate compound; and
   an average particle diameter of the second particle group is larger than an average particle diameter of the first particle group and, in the secondary particle (2), the primary particles (1a) belonging to the first particle group and the primary particles (1b) belonging to the second particle group are dispersed in each other.

2. The positive electrode active material according to claim 1, wherein:

   a relationship of $1.5 \leq d_2/d_1 \leq 10$ is satisfied;
   the $d_1$ represents the average particle diameter of the first particle group; and
   the $d_2$ represents the average particle diameter of the second particle group.

3. The positive electrode active material according to claim 2, wherein a relationship of $3.0 \leq d_2/d_1$ is satisfied.

4. The positive electrode active material according to claim 3, wherein a relationship of $5.0 \leq d_2/d_1$ is satisfied.

5. The positive electrode active material according to claim 2, wherein a relationship of $200 \text{ nm} \leq d_2 \leq 500 \text{ nm}$ is satisfied.

6. The positive electrode active material according to any one of claims 1 to 5, wherein:

   a relationship of $0.7000 < n_1/(n_1 + n_2) < 1.000$ is satisfied;

the $n_1$ represents a proportion of the number of the primary particles (1a) belonging to the first particle group; and
the $n_2$ represents a proportion of the number of the primary particles (1b) belonging to the second particle group.

7. The positive electrode active material according to any one of claims 1 to 5, wherein:

   a relationship of $0.4 \leq m_1/(m_1 + m_2) \leq 0.6$ is satisfied;
   the $m_1$ represents a total mass of the primary particles (1a) belonging to the first particle group; and
   the $m_2$ represents a total mass of the primary particles (1b) belonging to the second particle group.

8. The positive electrode active material according to any one of claims 1 to 5, wherein the olivine-type phosphate compound contains at least one selected from the group consisting of lithium iron phosphate, lithium manganese phosphate, and lithium manganese iron phosphate.

9. The positive electrode active material according to claim 1, wherein an aggregate constituted from the primary particles (1a) belonging to the first particle group and the primary particles (1b) belonging to the second particle group contains 2 to 4 primary particles (1b) belonging to the second particle group.

10. The positive electrode active material according to claim 2, wherein a relationship of $5\,\text{nm} \leq d_1 < 50\,\text{nm}$ is satisfied.

11. The positive electrode active material according to claim 10, wherein a relationship of $50\,\text{nm} \leq d_2 \leq 500\,\text{nm}$ is satisfied.

12. An electrode comprising a positive electrode layer (11), wherein the positive electrode layer (11) contains the positive electrode active material according to any one of claims 1 to 5.

13. A battery (100) comprising the electrode according to claim 12.

14. The battery (100) according to claim 13, which has a bipolar structure.

15. A method for producing a positive electrode active material, comprising:

   preparing two or more types of secondary particles (2) containing an olivine-type phosphate compound and different from each other in their average particle diameter of primary particles;
   disintegrating each of the two or more types of the secondary particles (2) to a scale of the primary particles by wet grinding to form a slurry in which the primary particles are dispersed; and
   spray-drying the slurry, in which two or more types of primary particles different from each other in average particle diameter are dispersed, to form new secondary particles (2).

# FIG. 1

# FIG. 2

# FIG. 3

NUMBER FREQUENCY [%]

P1

P2

$d_1$

$d_2$

PARTICLE DIAMETER [nm]

# FIG. 4

START

a

PREPARATION OF TWO OR MORE
TYPES OF SECONDARY PARTICLES

b

WET GRINDING
(DISINTEGRATION OF SECONDARY PARTICLES•
DISPERSION OF PRIMARY PARTICLES)

c

RE-FORMATION OF SECONDARY PARTICLES

d

FIRING

END

# FIG. 5

# FIG. 6

# FIG. 7

| No. | Secondary Particle | | | | | Electrode | |
| --- | --- | --- | --- | --- | --- | --- | --- |
| | First Particle Group | Second Particle Group | Average Particle Diameter Ratio | Number Ratio of Small Particles | Mass Ratio of Small Particles | Tortuosity (Ion Conductivity) | Fillability (Density) |
| | Small Particles | Large Particles | | | | | |
| | Average Particle Diameter($d_1$) | Average Particle Diameter($d_2$) | $d_2/d_1$ | $n_1/(n_1+n_2)$ | $m_1/(m_1+m_2)$ | | |
| | [nm] | [nm] | [−] | [−] | [−] | [−] | [−] |
| 1 | 40 | 61 | 1.5 | 0.7801 | 0.5 | 91 | 1 |
| 2 | 40 | 80 | 2.0 | 0.8889 | 0.5 | 87 | 1 |
| 3 | 40 | 120 | 3.0 | 0.9643 | 0.5 | 81 | 1 |
| 4 | 40 | 200 | 5.0 | 0.9921 | 0.5 | 58 | 1 |
| 5 | 40 | 298 | 7.5 | 0.9976 | 0.5 | 45 | 1 |
| 6 | 40 | 401 | 10 | 0.9990 | 0.5 | 29 | 1 |
| 7 | 40 | − | − | 1 | 1 | 100 | 1 |
| 8 | 61 | − | − | 1 | 1 | 89 | 0.93 |
| 9 | 80 | − | − | 1 | 1 | 73 | 0.82 |
| 10 | 120 | − | − | 1 | 1 | 65 | 0.67 |
| 11 | 200 | − | − | 1 | 1 | 44 | 0.59 |
| 12 | 298 | − | − | 1 | 1 | 37 | 0.58 |
| 13 | 401 | − | − | 1 | 1 | 26 | 0.55 |

EP 4 787 458 A1

Europäisches
Patentamt
European
Patent Office
Office européen
des brevets

# EUROPEAN SEARCH REPORT

**Application Number**

EP 25 22 6813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 154 156 A (JIANGSU JICUI MOLECULE ENGINEERING RES INSTITUTE CO LTD ET AL.) 23 May 2023 (2023-05-23) * paragraphs [0001], [0030] - [0038]; claims 1-12; figure 1 * | 1-15 | INV. H01M4/136 H01M4/36 H01M4/505 H01M4/58 H01M10/0525 |
| A | CN 118 231 653 A (BYD CO LTD) 21 June 2024 (2024-06-21) * see EP4579813A1 * & EP 4 579 813 A1 (BYD CO LTD [CN]) 2 July 2025 (2025-07-02) * claims 1-11; figures 2-4 * | 1-15 | |

-----

-----

TECHNICAL FIELDS
SEARCHED (IPC)

H01M

The present search report has been drawn up for all claims

| Place of search | Date of completion of the search | Examiner |
|---|---|---|
| Munich | 9 June 2026 | Szekely, Noemi Kinga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 6813

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2026

| Patent document cited in search report | | Publication date | Patent family member(s) | | Publication date |
|---|---|---|---|---|---|
| CN 116154156 | A | 23-05-2023 | NONE | | |
| CN 118231653 | A | 21-06-2024 | CN | 118231653 A | 21-06-2024 |
| | | | EP | 4579813 A1 | 02-07-2025 |
| | | | WO | 2025139142 A1 | 03-07-2025 |

EPO FORM P0459

For more details about this annex : see Official Journal of the European Patent Office, No. 12/82

**EP 4 787 458 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021009838 A